# EUROPÄISCHE PATENTSCHRIFT

(11) **EP 0 945 773 B1**
(45) Veröffentlichungstag und Bekanntmachung des Hinweises auf die Patenterteilung: **19.11.2003**
(21) Anmeldenummer: 99105460.2
(22) Anmeldetag: 17.03.1999
(51) Int. Cl.: G05D 23/19, A47J 27/62, F24C 7/08, F24C 15/10

(54) **Verfahren zum Betrieb eines Elektrowärmegerätes**
Method for operating an electric heating apparatus
Procédé d'actionnement d'un appareil de chauffage électrique

(30) Priorität: 27.03.1998 DE 19813550
(43) Veröffentlichungstag der Anmeldung: 29.09.1999
(73) Patentinhaber: E.G.O. ELEKTRO-GERÄTEBAU GmbH, 75038 Oberderdingen (DE)
(72) Erfinder: Bogdanski, Franz Dr., 75038 Oberderdingen (DE); Begero, Klaus, 75038 Oberderdingen/Flehingen (DE)
(74) Vertreter: Patentanwälte Ruff, Wilhelm, Beier, Dauster & Partner

(56) Entgegenhaltungen:
- EP-A- 0 190 004
- FR-A- 2 633 482
- US-A- 4 486 648
- US-A- 4 668 856
- US-A- 4 682 012
- US-A- 4 692 596
- US-A- 4 796 207
- PATENT ABSTRACTS OF JAPAN vol. 8, no. 47 (M-280), 2. März 1984 (1984-03-02) & JP 58 200938 A (TOKYO SHIBAURA DENKI KK), 22. November 1983 (1983-11-22)

## Beschreibung

### Anwendungsgebiet undStand der Technik

Die Erfindung betrifft ein Verfahren zum Betrieb eines Elektrowärmegerätes mit den Merkmalen des Oberbegriffs des Anspruchs 1. In gleicher Weise kann der Inhalt eines Behältnisses in einen Endzustand bzw. auf einen Endwert eines bestimmten Zustandes gebracht werden.

Bekannt sind solche Verfahren, bei denen, vor allem zu Beginn des Erwärmungsvorgangs, die Leistung so lange freigegeben wird, bis Fühler den eingestellten Endwert registrieren und durch eine Regelung das Abschalten der Heizeinrichtung veranlaßt wird. Ein Problem liegt jedoch häufig darin, daß der Wert, den die Fühler des Behältnisses registrieren, nicht genau mit den Verhältnissen in dem Behältnis übereinstimmt.

Vor allem wenn es um Überwachung der Temperatur geht, beispielsweise bei einem Kochtopf, registriert ein Fühler - bedingt durch die thermische Trägheit - eine andere, insbesondere eine niedrigere, Temperatur als in dem Behältnis tatsächlich vorherrscht. Dies hat zur Folge, daß ein Abschalten bei Erreichen des Endwertes an dem Fühler zu spät erfolgen und der Wert im Innenraum des Behältnisses schon beträchtlich überschritten sein kann. Des weiteren sind hier beispielsweise die Trägheit vieler Heizungseinrichtungen zu beachten.

Eine fest eingestellte Temperaturdifferenz, die den Unterschied zwischen den Verhältnissen im Innenraum des Behältnisses und an dem Fühler wiedergeben soll, scheidet aus, da hierdurch der Einsatzbereich stark eingegrenzt werden würde sowie die Genauigkeit des Verfahrens nicht den Bedingungen angepaßt wäre.

Die FR-A-2633482 beschreibt ein Verfahren zur Temperaturregelung der Erwärmung eines Behälters, wobei zuerst auf eine bestimmte Temperatur geheizt wird, welche unterhalb der vorgegebenen Maximaltemperatur liegt. Während einer anschließenden Ruhephase kann ein Angleich der Temperatur erfolgen. Anschließend wird weitergeheizt.

Die US-A-4796207 beschreibt ein Verfahren sowie eine Einrichtung zur Zubereitung von Nahrungsmitteln in einem Kochgefäß. Hierbei ist ein fester Temperaturwert vorgegeben, bis zu dem geheizt werden soll. Dabei wird die tatsächliche Temperatur gemessen und somit ein Regelvorgang beschrieben.

Die US-A-4682012 beschreibt eine Vorrichtung zur Beheizung eines Kochgefässes. Bis zu einer bestimmten vorgegebenen Temperatur wird ein Heizelement mit voller Leistung betrieben. Nachdem diese Temperatur erreicht worden ist, was einem Regelvorgang entspricht, wird die Leistungsabgabe angepasst bzw. gesenkt.

### AUFGABE UND LÖSUNG

Es wird als Aufgabe der Erfindung angesehen, ein Verfahren zum Betrieb eines Elektrowärmegerätes zu schaffen, das die Nachteile des Standes der Technik vermeidet, mit hoher Sicherheit ein Überschreiten des Endwertes verhindert sowie einfach zu realisieren ist.

Gelöst wird diese Aufgabe durch ein Verfahren mit den Merkmalen des Anspruchs 1. Dies ermöglicht ein langsames Annähern an den Endwert, das in Abhängigkeit von dem von dem Benutzer eingestellten Endwert sowie gespeicherten Daten und/oder Abläufen gesteuert wird, bis die Fühlerdaten in ausreichender Menge sowie mit genügend hoher Zuverlässigkeit vorliegen.

Die Steuerung arbeitet zu Beginn eine bestimmte Zeit, insbesondere für eine bestimmte Anzahl von Intervallen, unabhängig von den Fühlerdaten. Die Leistungsfreigabe erfolgt in Intervallen, vorzugsweise Intervallen mit unterschiedlicher Dauer, wobei insbesondere in einem bzw. dem ersten Intervall zuerst eine hohe und dann eine niedrige Leistung an die Heizungseinrichtung freigegeben wird. Ein Intervall umfaßt vorteilhaft eine Phase mit hoher bzw. voller Leistung und eine Phase mit geringer bzw. keiner Leistung, voller Leistung. Bei einigen Anwendungen, beispielsweise bei Kochplatten für Elektroherde, kann die Leistungsfreigabe quasi digital erfolgen, das bedeutet entweder volle oder keine Leistung.

So startet der Steuervorgang zu Beginn des Erwärmungsvorgangs mit einem festen Steuer-Intervall, wobei genau einmal für eine bestimmte Zeit die Leistung freigegeben und genau einmal für eine andere bestimmte Zeit die Leistung abgeschaltet wird. Durch diese vorbestimmte Erwärmungsdauer sowie die anschließende Ruhephase kann sich in dem Behälter in gewissem Maß eine Art Gleichgewichtszustand ausbilden, so daß die Fühlerdaten eine möglichst geringe Differenz zu dem tatsächlichen Zustand aufweisen. Des weiteren kann vorgesehen sein, daß jeweils am Ende einer Phase ohne Leistungsfreigabe die Fühlerdaten ausgewertet werden, da in diesem Fall das Behältnis im wesentlichen isoliert von äußeren Einflüssen ist.

Bei einer Ausführung der Erfindung ist es möglich, daß der Übergang von der Steuerung zu der Regelung fliegend erfolgt, wobei insbesondere in Abhängigkeit von Fühlerdaten die Regelung einsetzt und die Steuerung ablöst. Die Fühlerdaten können bevorzugt nicht zu einem bestimmten Zeitpunkt abgefragt werden, sondern permanent, um ein Verfahren zu schaffen, das auch bei nicht getakteter Leistungsfreigabe durchgeführt werden kann.

Gemäß der Erfindung wird nach wenigstens einem Steuerintervall die Heizungseinrichtung eingeschaltet und die Regelung setzt ein, wobei eine EIN-Zeit der EIN-Phase von den Fühlerdaten abhängt, insbesondere einem Mittelwert der Fühlerdaten mehrerer Fühler, Vorzugsweise kann die EIN-Zeit bei Erreichen bzw. Überschreiten eines gewissen Wertes oder eines bestimmten Anteils des Endwertes durch die Fühlerdaten augenblicklich beendet werden, woraufhin die Leistungsfreigabe durch die Regelung abgeschaltet wird.

Bevorzugt wird nach einer AUS-Phase, insbesondere zu Beginn einer EIN-Phase, während des Regelvorgangs die EIN-Zeit in Abhängigkeit von einer Beziehung, insbesondere der Differenz, eines Anteils der aktuellen Fühlerdaten zu dem eingestellten Endwert bestimmt. Somit kann beispielsweise bei einer größeren Differenz ein Intervall mit längerer EIN-Zeit vorgesehen sein, während bei geringerer Differenz, d.h. bei beinahe schon erreichtem Endwert, eine kurze EIN-Zeit eingestellt ist. Auf andere Weise kann zu Beginn einer AUS-Phase während des Regelvorgangs die AUS-Zeit in Abhängigkeit von einer Beziehung, insbesondere der Differenz, eines Anteils der aktuellen Fühlerdaten zu dem eingestellten Endwert bestimmt werden. Auf diese Weise ist die Dauer der AUS-Zeit regelbar.

Alternativ können wenigstens die AUS-Zeiten während des Steuervorgangs und/oder des Regelvorgangs eine vorgegebene Zeit betragen, insbesondere eine durch Einstellung des Endwertes vorgebbare Zeit, wobei vorzugsweise alle AUS-Zeiten des Steuervorgangs und/oder des Regelvorgangs jeweils gleich sind. Ein derartiges Verfahren kann sehr einfach gestaltet sein, und mit Vorteil beispielsweise bei Kochplatten von Elektroherden verwendet werden, die aufgrund der direkten Versorgung aus dem Stromnetz heraus sowie strengen Flickervorschriften eine gewisse Schalthäufigkeit pro Minute nicht überschreiten dürfen.

In weiterer Ausgestaltung der Erfindung kann gemäß dem Verfahren der Endzustand für eine einstellbare HALTE-Zeit gehalten werden, wobei insbesondere nach dieser HALTE-Zeit die Leistungsfreigabe gesenkt wird, vorzugsweise für zumindest eine gewisse Dauer abgeschaltet wird. Eine Automatik ist realisierbar, die einen Endwert anfährt und danach noch für eine bestimmte Dauer hält.

In Erweiterung können einem bestimmten, wählbaren oder eingebbaren, Programm gemäß verschiedene Endwerte angefahren und jeweils für eine vorgebbare Zeit gehalten werden. Der Übergang von einem Endwert zu dem nächsten erfolgt durch einen Steuervorgang, der wenigstens ein Steuer-Intervall mit von dem aktuellen Endwert und dem nächsten anzufahrenden Endwert bestimmten EIN-Zeiten und AUS-Zeiten aufweist. Erfindungsgemäß kann das Anfahren eines Endwertes mit einem Steuervorgang eingeleitet werden, der von einem Regelvorgang auf eine der oben beschriebenen Arten abgelöst wird. Vorzugsweise beginnt für ein direktes und möglichst schnelles Anfahren des nächsten Endwertes das wenigstens eine Steuer-Intervall des Steuervorgangs bei einer Absenkung des Endwertes mit einer AUS-Zeit und insbesondere bei einer Erhöhung des Endwertes mit einer EIN-Zeit.

Vorzugsweise sind in einem Speicher Werte abgelegt für vorgegebene EIN-Zeiten und/oder AUS-Zeiten des Steuervor gangs und/oder des Regelvorgangs, die jeweils einem eingestellten Endwert zugeordnet sein können. In Abhängigkeit von gemessenen Differenzen eines Anteils der aktuellen Fühlerdaten zu dem eingestellten Endwert kann auf diese abgelegten Werte zugegriffen werden. Bevorzugt wird ein Wert im Bereich etwa der Hälfte der Fühlerdaten.

Bei einer bevorzugten Anwendung des erfindungsgemäßen Verfahrens sind die Fühlerdaten Angaben über die Temperatur des Behältnisses und/oder dessen zu erwärmenden Inhalts und werden insbesondere von zwei Fühlern bereitgestellt, wobei der Endwert vorzugsweise die gewünschte Temperatur des Inhalts ist.

Die Steuerung und Regelung kann in einem elektronischen Baustein erfolgen, bevorzugt wird ein Micro-Controller. Diesem kann neben Eingängen für Fühlerdaten sowie von einem Benutzer einstellbare Werte ein Speicherbaustein zugeordnet sein, in dem eine Vielzahl von Werten bzw. Daten und/oder fest einprogrammierten Abläufen gespeichert sind. Der Speicher kann in dem Micro-Controller enthalten sein.

Bei einer bevorzugten Anwendung ist eine für den Inhalt und/oder das Behältnis vorgesehene Endtemperatur von einem Benutzer über ein Stellorgan und/oder eine elektronische Steuerung vorgebbar, insbesondere mit Tasten oder Berührungsschaltern als Eingabemittel. Somit läßt sich das Verfahren bevorzugt bei einem Elektroherd mit wenigstens einer Heizeinrichtung anwenden. Auf der Heizung ist ein Kochtopf o. dgl. mit Kochgut als Inhalt zu erwärmen und dem Kochtopf sind Temperaturfühler zugeordnet, die eine signalübertragende Verbindung zu der Steuerung bzw. einem Micro-Controller aufweisen. Ein Benutzer kann als Endwert eine Temperatur bzw. eine Leistungsstufe für das Kochgut vorgeben, die erst angefahren und dann automatisch und/oder für eine bestimmte Zeit gehalten wird, wobei die Zeit vorgebbar sein kann. Ebenso vorteilhaft kann die Erfindung auf anderen Gebieten zum Einsatz kommen, beispielsweise bei einem Druckkessel o. dgl., wobei hier der Endwert ein bestimmter Druck im Inneren sein kann.

Diese und weitere Merkmale gehen außer aus den Ansprüchen auch aus der Beschreibung und der Zeichnung hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränkt die unter diesen gemachten Aussagen nicht in ihrer Allgemeingültigkeit.

### KURZBESCHREIBUNG DER ZEICHNUNGEN

Ein Ausführungsbeispiel der Erfindung ist in der Zeichnung dargestellt und wird im folgenden näher erläutert. In der Zeichnung zeigt:

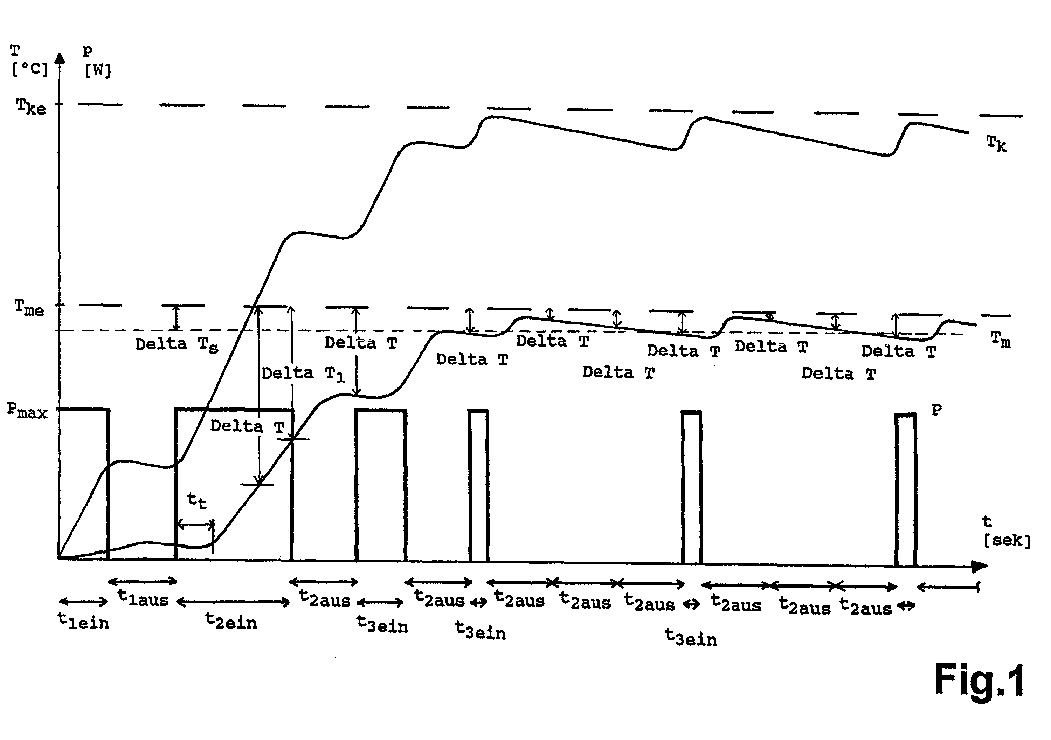

- Fig. 1: ein Beispieldiagramm eines erfindungsgemäßen Verfahrens, in dem Temperaturverläufe von Fühler und Kochgut sowie EIN-Zeiten und AUS-Zeiten dargestellt sind.

### DETAILLIERTE BESCHREIBUNG DES AUSFÜHRUNGSBEISPIELS

Die Fig. 1 zeigt ein Diagramm, bei dem über der Zeitachse t sowohl die Temperatur eines Kochguts Tₖ als auch der Mittelwert der Temperatur Tₘ der Fühler sowie die Leistung P aufgetragen sind. Dabei ist zu beachten, daß die Zeitachse durchgängig und linear skaliert ist, während die vertikale Leistungs- bzw. Temperaturachse zwar für jede Kurve linear skaliert sowie durchgängig ist, die Maßstäbe jedoch nicht zwangsläufig die gleichen sind, vor allem für die Temperaturkurven. Ausgegangen wird von einem Kochtopf mit zwei Temperaturfühlern, von denen ein Mittelwert verwendet wird. Die Leistung P ist in dem dargestellten Diagramm nicht stufenlos veränderbar, sondern nur zwischen Null und der vollen Leistung Pₘₐₓ. Die Erfindung ist jedoch nicht darauf beschränkt, eine beliebige Einstellung der Leistungshöhe ist möglich.

Zum Zeitpunkt t=o wird das Elektrowärmegerät eingeschaltet sowie mit Eingabemitteln eine Endtemperatur für das Kochgut Tₖₑ eingegeben. Möglich ist alternativ eine Eingabe der Art des Kochgutes selber, aus der die Steuerung des Elektrowärmegerätes die dazu passende, in einem Speicher abgelegte, Kochgutendtemperatur ermitteln kann. Abhängig von der Kochgutendtemperatur Tₖₑ ist ein Wert für die Endtemperatur des Fühlermittelwertes Tₘₑ vorgegeben, welcher die Meßgröße bildet sowie in kausalem Zusammenhang mit der Kochguttemperatur Tₖ steht. Da jeder beliebigen Kochguttemperatur Tₖ eine bestimmte Fühlermittelwerttemperatur Tₘ zugeordnet ist, lassen sich auf umgekehrtem Wege Rückschlüsse von dieser Fühlertemperatur, unter Umständen unter Beachtung der Art des Kochgutes, auf die Temperatur Tₖ des Kochgutes ziehen.

Erfindungsgemäß wird zu Beginn des Vorgangs die Leistung P für die Zeit t₁ₑᵢₙ, die in einem Speicher abgelegt ist und, wie nachfolgend beschrieben, je nach Kochgut und/oder dessen Menge unterschiedlich sein kann, freigegeben. An den Kurven der Temperatur des Kochgutes und des Fühlermittelwertes läßt sich sehr gut die sogenannte systembedingte Totzeit tₜ ersehen, die die Zeitspanne zwischen Anstieg der Kochguttemperatur Tₖ und dem Anstieg der Fühlertemperatur Tₘ darstellt. Sie entsteht dadurch, daß das Kochgut näher an der Heizungseinrichtung angeordnet ist und somit sowohl zeitlich früher als auch absolut gesehen einen höheren Temperaturanstieg erlebt, da auf dem Weg von dem Kochgut zu den Temperaturfühlern, die bevorzugt an dem Deckel oder Oberteil des Behältnisses oder Kochtopfes angeordnet sind, Verluste auftreten. In der Praxis ist es so, daß die Heizwärme außer über die Außenwandung des Behältnisses zuerst durch das gesamte Kochgut hindurch wandert und dann erst durch Erwärmung der Luftschicht zwischen Kochgut und Fühler den oder die Fühler erreicht. Derartige Zusammenhänge können gemäß einem weiteren Aspekt der Erfindung in einem Speicher für die Steuerung bzw. den Betrieb des Elektrowärmegerätes abgespeichert sein.

Nach der festen Einschaltdauer t₁ₑᵢₙ wird die Heizungseinrichtung für die feste Zeit t₁ₐᵤₛ abgeschaltet, so daß sich in dem System eine ausgeglichenere Wärmeverteilung einstellen kann. Wie man sieht, fällt beinahe unmittelbar nach Abschalten der Leistung die Kochguttemperatur Tₖ ab, während die Fühlertemperatur Tₘ zuerst weiterhin steigt, um nach Erreichen eines Scheitelpunktes ebenfalls langsam abzufallen. In diesem Beispiel stellen t₁ₑᵢₙ und t₁ₐᵤₛ das erste feste Steuer-Intervall des Verfahrens dar.

Nach dem Steuer-Intervall wird erneut die Leistung eingeschaltet, wobei bei dem hier dargestellten Beispiel zu diesem Zeitpunkt der Regelvorgang einsetzt. Die Dauer dieser EIN-Zeit t₂ₑᵢₙ ist nicht fest vorgegeben, sondern bestimmt sich aus der permanent oder in kurzen Abständen überwachten Differenz Delta T zwischen der Endtemperatur des Fühlermittelwertes Tₘₑ und der aktuellen Fühlertemperatur Tₘ. Unterschreitet diese Differenz Delta T einen vorgegebenen Betrag bzw. Wert Delta T₁, so wird die Heizung abgeschaltet, und zwar für die Zeit t₂ₐᵤₛ. Es ist zu erkennen, wie die Fühlertemperatur Tₘ während der Totzeit tₜ auch nach Abschalten der Heizung weiter steigt, bis sie nach Passieren des Scheitelpunkts leicht abfällt.

Nach der in diesem Fall vorgegebenen AUS-Zeit t₂ₐᵤₛ erfolgt eine erneute Leistungsfreigabe, deren Dauer t₃ₑᵢₙ von der am Ende von t₂ₐᵤₛ festgestellten Temperaturdifferenz zwischen dem Endwert Tₘₑ und dem aktuellen Wert der Fühlertemperatur Tₘ bestimmt wird. Es besteht somit ein funktionaler Zusammenhang zwischen Temperaturdifferenz Delta T und der EIN-Zeit, der entweder in einer mathematisch geschlossen darstellbaren Funktion ausgedrückt werden kann oder durch eingespeicherte Werte vorgegeben sein kann. Somit kann während des Regelvorgangs die Dauer der EIN-Zeiten in Abhängigkeit von der oben genannten Temperaturdifferenz bestimmt werden, und bei der hier dargestellten Ausführung der Erfindung die Dauern der AUS-Zeiten t₂ₐᵤₛ fest vorgegeben sein.

Nach Ablauf der EIN-Zeit t₃ₑᵢₙ wird die Heizungseinrichtung erneut für die feste Zeit t₂ₐᵤₛ abgeschaltet. Nach Ablauf von t₂ₐᵤₛ wird die Temperaturdifferenz Delta T ermittelt und davon abhängig die nächste EIN-Zeit t₄ₑᵢₙ bestimmt, die in diesem Fall aufgrund der geringen Temperaturdifferenz sehr kurz ist. Man erkennt, daß die Kochguttemperatur Tₖ beinahe den Endwert Tₖₑ erreicht hat.

Nach dem Abschalten der Leistung P und der Zeit t₂ₐᵤₛ wird die Temperaturdifferenz Delta T gemessen, die jedoch in diesem Fall unterhalb eines vorgegebenen Schwellenwertes Delta Tₛ liegt und somit nicht zu einer Leistungsfreigabe führt. Das erfindungsgemäße Verfahren setzt die Leistungsfreigabe für eine weitere AUS-Zeit t₂ₐᵤₛ aus, nach der die Temperaturdifferenz erneut gemessen wird. Da sie immer noch kleiner ist als der Schwellwert Delta Ts, folgt eine weitere AUS-Zeit. Nach deren Ablauf ist die Temperaturdifferenz Delta T größer als der Schwellwert, so daß in Abhängigkeit von der Größe von Delta T eine EIN-Zeit t₅ₑᵢₙ bestimmt wird, während der die Leistungsfreigabe erfolgt.

Nach der Zeit t₅ₑᵢₙ erfolgt auf zuvor beschriebene Weise am Ende der AUS-Zeit die Messung der Temperaturdifferenz Delta T. In dem dargestellen Beispiel vergehen wieder drei AUS-Zeiten, bis Delta T den Schwellwert Delta Tₛ überschreitet und eine Leistungsfreigabe erfolgt. Es kann davon ausgegangen werden, daß spätestens hier ein etwa eingeschwungener Regelvorgang vorliegt.

Wie man sieht, bleibt die Kochguttemperatur Tₖ stets unterhalb des Endwertes Tₖₑ, was vor allem bei Erwärmungsvorgängen für empfindliche Speisen wie Milchreis oder Gemüse wichtig ist. Es ist im Rahmen der Erfindung möglich, die End- bzw. Schwellwerte oder den gesamten Regelvorgang derart auszulegen, daß die Kochguttemperatur um ihren Endwert pendelt, mit mehr oder weniger gleich starken Ausschlägen nach oben und unten.

Ein großer Vorteil der Erfindung kann mit dem vorgeschalteten festen Steuer-Intervall darin bestehen, daß vor allem bei Heizungseinrichtungen mit kurzer Ansprechzeit und hoher Leistung das System ohne Einfluß einer möglicherweise gestörten oder noch unzuverlässig arbeitenden Regelung näher an einen ausgeglicheneren Zustand geführt werden kann. Die Totzeit tₜ, die vor allem einem mit Kochgut gefüllten Kochtopf innewohnt, kann als störender Faktor stark reduziert bzw. in der Auswirkung neutralisiert werden.

In der folgenden Tabelle ist eine beispielhafte Auflistung von möglichen Einstellparametern in Abhängigkeit von verschiedenem Kochgut aufgelistet. Als Beispiel ist Kochgut aufgeführt, das aufzuwärmen ist (Linsen aus der Dose) oder das gedünstet werden soll (Gemüse oder Milchreis).

### Beispiel:

| Einstellparameter abhängig vom Kochgut | | |
|---|---|---|
| | aufwärmen | dünsten |
| Tₖₑ | 80°C | 100°C |
| Tₘₑ | 60°C | 95°C |
| t₁ₑᵢₙ | 90sek | 60sek |
| t₁ₐᵤₛ | 100sek | 60sek |
| t₂ₑᵢₙ | =f(Delta T₁) | =f(Delta T₁) |
| t₂ₐᵤₛ | 120sek | 100sek |
| t₃ₑᵢₙ | =f(Delta T) | =f(Delta T) |
| Delta T₁ | 0,5* Tₘₑ | 0,3* Tₘₑ |

Der Zusammenhang zwischen dem von dem Benutzer eingestellten Endwert Tₖₑ für das Kochgut und dem sich daraus ergebenden Endwert der Fühlertemperatur Tₘₑ ist für verschiedene Fälle abgelegt in dem Speicher.

Der Zusammenhang f (Delta T) könnte beispielsweise folgender sein:

| | |
|---|---|
| Delta T < 5K | t₃ₑᵢₙ= 0 sek |
| 5K < Delta T < 10K | t₃ₑᵢₙ= 3 sek |
| 10K < Delta T < 20K | t₃ₑᵢₙ= 10 sek |
| 20K < Delta T < 30K | t₃ₑᵢₙ= 30 sek |
| 30K < Delta T | t₃ₑᵢₙ= 60 sek |

Somit steigt die EIN-Zeit t₃ₑᵢₙ überproportional zu der Temperaturdifferenz Delta T, um sowohl schnelles Anfahren des Endwertes als auch schnelles Nachregeln zu ermöglichen.

Betrachtet man den groben Verlauf der Temperaturkurven, so erinnern diese an die typische Kurve eines PID-Reglers. Die Abweichung durch das fest vorgegebene Steuer-Intervall, die von Anfang an einen beherrschbaren sowie wunschgemäß ablaufenden Erwärmungsvorgang ermöglicht, beeinflußt die Regeleigenschaften nur wenig.

Mit Vorteil kann das erfindungsgemäße Verfahren vor allem bei Heizungseinrichtungen eingesetzt werden, die keine direkte Abstufung der Leistung aufweisen, sondern direkt an das Stromnetz angeschlossen bzw. davon abgetrennt werden (Takten), wie beispielsweise Kochplatten von Herden und Heizungen von Backöfen. Die Steuerung kann in einem Micro-Controller enthalten sein, der bevorzugt einen Speicher für die festen Zeiten und Temperaturen aufweisen bzw. mit einem solchen verbunden sein kann.

Die gesamte Prozeßdauer oder die Dauer, während der die Temperatur Tₘ in einem gewissen Bereich um die Endtemperatur Tₘₑ liegt, können vorgegeben bzw. einstellbar sein. Nach Ablauf einer derartigen eingestellten Dauer kann die gesamte Heizungseinrichtung entweder größtenteils oder völlig abgeschaltet werden. Zur Realisierung komplizierter mehrstufiger Erwärmungsvorgänge kann sich jedoch an den in Fig. 1 dargestellen Verlauf ein weiterer anschließen, der zum Erreichen entweder eines höheren oder niedrigeren neuen Endwertes bestimmt ist. Nach einem Aspekt der Erfindung leitet das hier beschriebene Verfahren den Übergang entweder mit einer AUS-Zeit ein (beim Übergang zu einer niedrigeren Endtemperatur) oder bei Vorgabe eines höheren Endwertes mit einer EIN-Zeit. Das Verfahren eignet sich für eine Veränderung des Endwertes, wobei diese Änderung bevorzugt wie das oben beschriebene Erreichen mehrerer Endwerte aufgefaßt und dementsprechend ausgelegt werden kann.

Ein erfindungsgemäßes Verfahren zum Betrieb eines Elektrowärmegerätes mit einem wenigstens einen Fühler aufweisenden Kochtopf kann vorsehen, daß die Leistungsfreigabe an eine Heizeinrichtung zuerst in einem vorgegebenen Steuervorgang erfolgt. Vorteilhaft erhält die Regelung ihre Werte nicht direkt von der Kochguttemperatur, sondern von einer hiervon unterschiedlichen Fühlertemperatur. Nach wenigstens einem Steuer-Intervall kann die Regelung einsetzen, sobald von den Fühlern gelieferte Daten in einem bestimmten, eine sichere Regelung ermöglichenden Bereich liegen. Bevorzugt weist das Verfahren feste AUS-Zeiten für die Heizungseinrichtung auf, während die Dauern der EIN-Zeiten in Abhängigkeit von einer Temperaturdifferenz zwischen der aktuellen Fühlertemperatur zu einer vorgegebenen Endtemperatur für die Fühler jeweils nach Ablauf einer AUS-Zeit festgelegt werden können. Je nach dem von einem Benutzer einzustellenden gewünschten Endwert können in einem Speicher Werte für die zu erwartende Differenz zwischen Fühler- und Kochguttemperatur enthalten sein, die gesicherte Rückschlüsse auf die Kochguttemperatur ermöglichen.

## Patentansprüche

1. Verfahren zum Betrieb eines Elektrowärmegerätes, mit dem wenigstens ein Behältnis durch Erwärmung bezüglich seines Zustandes (Tₖ) auf einen Endwert (Tₖₑ) gebracht werden soll, wobei dem Elektrowärmegerät der Endwert eingegeben wird und wobei eine Leistungsfreigabe an eine Heizeinrichtung im wesentlichen von Fühlerdaten (Tₘ) abhängt, die über wenigstens einen dem Behältnis zugeordneten Fühler ermittelt werden, wobei die Leistungsfreigabe ausgehend von vorgegebenen Daten und dem Endwert (Tₖₑ) solange nach einem vorgegebenen Steuervorgang erfolgt, bis die Fühlerdaten (Tₘ) in einem bestimmten Bereich (Delta Tₛ) liegen, und ab hier die Leistungsfreigabe von den Fühlerdaten (Tₘ) ausgehend geregelt wird, **dadurch gekennzeichnet, daß** die Leistungsfreigabe in Intervallen erfolgt, wobei der Steuervorgang zu Beginn des Erwärmungsvorgangs wenigstens ein festes Steuer-Intervall aufweist und genau einmal für eine bestimmte Zeit (t₁ₑᵢₙ) die Leistung freigegeben und genau einmal für eine andere bestimmte Zeit (t₁ₐᵤₛ) die Leistung abgeschaltet wird, wobei nach wenigstens einem Steuer-Intervall die Heizungseinrichtung eingeschaltet wird und die Regelung einsetzt, wobei eine EIN-Zeit (t₂ₑᵢₙ) der EIN-Phase von den Fühlerdaten (Tₘ) abhängt.

2. Verfahren nach Anspruch 1, **dadurch gekennzeichnet, daß** die Leistungsfreigabe in Intervallen unterschiedlicher Dauer (t₃ₑᵢₙ, t₄ₑᵢₙ, t₅ₑᵢₙ) erfolgt und insbesondere in einem Intervall zuerst hohe, vorzugsweise die volle (Pₘₐₓ), Leistung und dann niedrige, vorzugsweise keine, Leistung an die Heizungseinrichtung freigegeben wird.

3. Verfahren nach einem der vorhergehenden Ansprüche, **dadurch gekennzeichnet, daß** der Übergang von der Steuerung zu der Regelung fliegend erfolgt, wobei insbesondere in Abhängigkeit von Fühlerdaten (Tₘ) die Regelung einsetzt und die Steuerung ablöst.

4. Verfahren nach Anspruch 1, **dadurch gekennzeichnet, daß** eine EIN-Zeit (t₂ₑᵢₙ) der EIN-Phase von einem Mittelwert der Fühlerdaten mehrerer Fühler abhängt, vorzugsweise bei Überschreiten eines gewissen Wertes oder eines bestimmten Anteils (Delta T₁) des Endwertes (Tₘₑ) augenblicklich beendet ist und die Leistungsfreigabe von der Regelung infolgedessen abgeschaltet wird.

5. Verfahren nach einem der vorhergehenden Ansprüche, **dadurch gekennzeichnet, daß** zu Beginn einer EIN-Phase während des Regelvorgangs die EIN-Zeit (t₃ₑᵢₙ, t₄ₑᵢₙ, t₅ₑᵢₙ) in Abhängigkeit von einer Beziehung, insbesondere der Differenz, eines Anteils der aktuellen Fühlerdaten (Tₘ) zu dem eingestellten Endwert (Tₖₑ) bestimmt wird.

6. Verfahren nach einem der vorhergehenden Ansprüche, **dadurch gekennzeichnet, daß** zu Beginn einer AUS-Phase während des Regelvorgangs die AUS-Zeit in Abhängigkeit von einer Beziehung, insbesondere der Differenz, eines Anteils der aktuellen Fühlerdaten (Tₘ) zu dem eingestellten Endwert (Tₖₑ) bestimmt wird.

7. Verfahren nach einem der Ansprüche 1 bis 5, **dadurch gekennzeichnet, daß** die AUS-Zeiten während des Steuervorgangs und/oder des Regelvorgangs eine vorgegebene Zeit betragen, insbesondere eine durch Einstellung des Endwertes (Tₖₑ) vorgebbare Zeit, wobei vorzugsweise alle AUS-Zeiten des Steuervorgangs und/oder des Regelvorgangs jeweils gleich sind.

8. Verfahren nach einem der vorhergehenden Ansprüche, **dadurch gekennzeichnet, daß** der Endwert (Tₘₑ) der Fühlerdaten (Tₘ) für eine einstellbare HALTE-Zeit gehalten wird, wobei insbesondere nach dieser HALTE-Zeit die Leistungsfreigabe gesenkt wird, vorzugsweise dauerhaft abgeschaltet wird.

9. Verfahren nach einem der Ansprüche 1 bis 7, **dadurch gekennzeichnet, daß** einem bestimmten wählbaren Programm gemäß verschiedene Endwerte (Tₖₑ) angefahren und jeweils für eine vorgebbare Zeit gehalten werden, wobei der Übergang von einem Endwert zu dem nächsten durch einen Steuervorgang erfolgt, der wenigstens ein Steuer-Intervall mit von dem aktuellen Endwert und dem nächsten anzufahrenden Endwert abhängigen bestimmten EIN-Zeiten und AUS-Zeiten aufweist.

10. Verfahren nach Anspruch 9, **dadurch gekennzeichnet, daß** das wenigstens eine Steuer-Intervall des Steuervorgangs bei einer Absenkung des Endwertes mit einer AUS-Zeit und insbesondere bei einer Erhöhung des Endwertes mit einer EIN-Zeit beginnt.

11. Verfahren nach einem der vorhergehenden Ansprüche, **dadurch gekennzeichnet, daß** in einem Speicher Werte abgelegt sind für die vorgegebenen EIN-Zeiten (t₁ₑᵢₙ, t₃ₑᵢₙ, t₄ₑᵢₙ, t₅ₑᵢₙ) und/oder AUS-Zeiten (t₁ₐᵤₛ, t₂ₐᵤₛ) des Steuervorgangs und/oder des Regelvorgangs, die vorzugsweise jeweils einem eingestellten Endwert (Tₖₑ) zugeordnet sind, und auf die insbesondere in Abhängigkeit von gemessenen Differenzen eines Bruchteils der aktuellen Fühlerdaten (Tₘ) zu dem eingestellten Endwert (Tₖₑ) zugegriffen wird.

12. Verfahren nach einem der vorhergehenden Ansprüche, **dadurch gekennzeichnet, daß** die Fühlerdaten (Tₘ) Angaben über die Temperatur des Behältnisses und/oder dessen zu erwärmenden Inhalts sind und insbesondere von zwei Fühlern bereitgestellt werden, wobei der eingestellte Endwert (Tₖₑ) vorzugsweise die gewünschte Temperatur des Inhalts ist.

13. Verfahren nach Anspruch 12, **dadurch gekennzeichnet, daß** eine für den Inhalt und/oder das Behältnis vorgesehene Endtemperatur (Tₖₑ) von einem Benutzer über ein Stellorgan und/oder eine elektronische Steuerung vorgegeben wird, insbesondere mit Berührungsschaltern als Eingabemittel.

## Claims

1. Method for the operation of an electric heating apparatus, with which the state (Tₖ) of at least one container can be brought by heating to a final value (Tₖₑ), in which the final value is inputted into the electric heating apparatus and in which a power release to a heating device is essentially dependent on sensor data (Tₘ), which are determined by means of at least one sensor associated with the container, wherein, on the basis of the preset data and the final value (Tₖₑ), the power release takes place following a preset control process until the sensor data (Tₘ) are in a given range (delta Tₛ) and as from then the power release is regulated on the basis of the sensor data (Tₘ), **characterized in that** the power release takes place in intervals, the control process having at the start of the heating process at least one fixed control interval and the power is released precisely once for a given time (T_{1 on}) and the power is disconnected precisely once for another given time (T_{1 off}), and after at least one control interval the heating device is switched on and the regulating means starts up, an ON time (t_{2 on}) of the ON phase being dependent on the sensor data (Tₘ).

2. Method according to claim 1, **characterized in that** the power release takes place in intervals, preferably in intervals of different duration (t_{3 on}, t_{4 on}, t_{5 on}) and in particular in one interval firstly high and preferably the full (Pₘₐₓ) power and then low, preferably no power is released to the heating device.

3. Method according to one of the preceding claims, **characterized in that** the transition from the control to the regulation takes place continuously and the regulation starts and the control stops as a function of sensor data (Tₘ).

4. Method according to claim 1, **characterized in that** an ON time (t_{2 on}) of the ON phase is dependent on a mean value of the sensor data of several sensors and is preferably instantaneously ended on exceeding a given value or a given proportion (delta T₁) of the final value (Tₘₑ) and the power release is then switched off by the regulating means.

5. Method according to one of the preceding claims, **characterized in that** at the start of the ON phase during the regulating process, the ON time (t_{3 on}, t_{4 on}, t_{5 on}) is determined as a function of a relationship, particularly the difference of a proportion of the actual sensor data (Tₘ) to the set final value (Tₖₑ).

6. Method according to one of the preceding claims, **characterized in that** at the start of the OFF phase during the regulating process, the OFF time is determined as a function of a relationship, particularly the difference of a proportion of the actual sensor data (Tₘ) with respect to the set final value (Tₖₑ) .

7. Method according to one of the claims 1 to 5, **characterized in that** the OFF times during the control and/or regulating process last a predetermined time, particularly a time predeterminable by setting the final value (Tₖₑ) and preferably all the OFF times of the control and/or regulating process are identical.

8. Method according to one of the preceding claims, **characterized in that** the final value (Tₘₑ) of the sensor data (Tₘ) is held for a settable HOLD time and in particular following this HOLD time the power release is reduced and preferably permanently disconnected.

9. Method according to one of the claims 1 to 7, **characterized in that** a given, selectable program is approached to different final values (Tₖₑ) and in each case held for a predeterminable time, the transition from one final value to the next taking place by a control process, which has at least one control interval with specific ON and OFF times dependent on the actual final value and the next final value to be approached.

10. Method according to claim 9, **characterized in that** at least one control interval of the control process starts with a reduction of the final value with an OFF time and in particular with an increase in the final value with an ON time.

11. Method according to one of the preceding claims, **characterized in that** values are stored in a memory for the predetermined ON times (t_{1 on}, t_{3 on}, t ₒₙ, t_{5 on}) and/or OFF times (t_{1 off}, t_{2 off}) of the control and/or regulating process, which are preferably in each case associated with a set final value (Tₖₑ) and which are in particular accessed as a function of measured differences of a fraction of the actual sensor data (Tₘ) compared with the set final value (Tₖₑ).

12. Method according to one of the preceding claims, **characterized in that** the sensor data (Tₘ) are details concerning the temperature of the container and/or its content to be heated and are in particular provided by two sensors, the set final value (Tₖₑ) preferably being the desired content temperature.

13. Method according to claim 12, **characterized in that** a final temperature (Tₖₑ) for the content and/or container is preset by a user by means of a controlling member and/or an electronic control, particularly with touch switches as inputting means.

## Revendications

1. Procédé pour l'actionnement d'un appareil de chauffage électrique, par lequel au moins un récipient doit être amené par échauffement à une valeur finale (Tₖₑ) de son état (Tₖ), la valeur finale étant entrée dans l'appareil de chauffage électrique et le débit de puissance dépendant pour l'essentiel de données de capteur (Tₘ), déterminées par l'intermédiaire d'au moins un capteur affecté au récipient, le débit de puissance ayant lieu à partir des données prescrites et de la valeur finale (Tₖₑ) suivant un processus de commande prédéfini aussi longtemps que les données de capteur (Tₘ) se situent dans une plage donnée (Delta Tₛ), et qu'à partir de là le débit de puissance est réglé en fonction des données de capteur (Tₘ), **caractérisé en ce que** le débit de puissance se fait par intervalles, le processus de commande au début du processus d'échauffement présentant au moins un intervalle de commande fixe, et la puissance étant émise exactement une fois pour un temps donné (t₁ₘₐᵣ) et coupée exactement une fois pour un autre temps donné (t₁ₐᵣᵣ), le dispositif de chauffage étant activé et la régulation se mettant en marche au bout d'au moins un intervalle de commande, un temps de MARCHE (t₂ₘₐᵣ) de la phase de MARCHE dépendant des données de capteur (Tₘ).

2. Procédé suivant la revendication 1, **caractérisé en ce que** le débit de puissance a lieu à des intervalles de différentes durées (t₃ₘₐᵣ, t₄ₘₐᵣ, t₅ₘₐᵣ) et qu'en particulier est émise vers le dispositif de chauffage au cours d'un intervalle tout d'abord une puissance élevée, de préférence pleine (Pₘₐₓ), et ensuite une puissance faible de préférence nulle.

3. Procédé suivant l'une des revendications précédentes, **caractérisé en ce que** la transition entre la commande et la régulation est flottante, et que la régulation intervient en fonction des données de capteur (Tₘ) et succède à la commande.

4. Procédé suivant la revendication 1, **caractérisé en ce qu'**un temps de MARCHE (t₂ₘₐᵣ) de la phase de MARCHE dépend d'une valeur moyenne des données de plusieurs capteurs, est de préférence immédiatement arrêté lors du dépassement d'une valeur donnée ou d'une partie donnée (Delta T₁) de la valeur finale (Tₘₑ), à la suite de quoi le débit de puissance est coupé par la régulation.

5. Procédé suivant l'une des revendications précédentes, **caractérisé en ce qu'**au début d'une phase de MARCHE pendant le processus de régulation le temps de MARCHE (t₃ₘₐᵣ, t₄ₘₐᵣ, t₅ₘₐᵣ) est déterminé en fonction d'un rapport, en particulier de la différence, entre une partie des données de capteur momentanées (Tₘ) et la valeur finale réglée (Tₖₑ)·

6. Procédé suivant l'une des revendications précédentes, **caractérisé en ce qu'**au début d'une phase d'ARRÊT pendant le processus de régulation le temps d'ARRÊT est déterminé en fonction d'un rapport, en particulier de la différence, entre une partie des données de capteur momentanées (Tₘ) et la valeur finale réglée (Tₖₑ).

7. Procédé suivant l'une des revendications 1 à 5, **caractérisé en ce que** les temps d'ARRÊT pendant le processus de commande et/ou de régulation ont une durée prescrite, en particulier un temps pouvant être prescrit par réglage de la valeur finale (Tₖₑ), tous les temps d'ARRÊT du processus de commande et/ou du processus de régulation étant de préférence identiques.

8. Procédé suivant l'une des revendications précédentes, **caractérisé en ce que** la valeur finale (Tₘₑ) des données de capteur (Tₘ) est maintenue pendant un temps de MAINTIEN réglable, le débit de puissance étant diminué après ce temps de MAINTIEN, et de préférence coupé durablement.

9. Procédé suivant l'une des revendications 1 à 7, **caractérisé en ce que** différentes valeurs finales (Tₖₑ) sont atteintes conformément à un programme donné pouvant être sélectionné, et maintenues pendant un temps déterminable, le passage d'une valeur finale à la suivante étant effectué par un processus de commande comprenant au moins un intervalle de commande avec des temps de MARCHE et des temps d'ARRÊT dépendant de la valeur finale momentanée et de la valeur finale suivante à atteindre.

10. Procédé suivant la revendication 9, **caractérisé en ce que** l'intervalle de commande, au moins au nombre de un, commence par un temps d'ARRÊT pour un abaissement de la valeur finale et par un temps de MARCHE pour une augmentation de la valeur finale.

11. Procédé suivant l'une des revendications précédentes, **caractérisé en ce que** des valeurs sont déposées dans une mémoire pour les temps de MARCHE (t₁ₘₐᵣ, t₃ₘₐᵣ, t₄ₘₐᵣ, t₅ₘₐᵣ) et/ou les temps d'ARRÊT (t₁ₐᵣᵣ, t₂ₐᵣᵣ) prescrits dans le processus de commande et/ou de régulation, qui sont affectées de préférence à une valeur finale (Tₖₑ) réglée, et auxquelles il est accédé en fonction des différences mesurées entre une fraction des données de capteur momentanées (Tₘ) et la valeur finale (Tₖₑ) réglée.

12. Procédé suivant l'une des revendications précédentes, **caractérisé en ce que** les données de capteur (Tₘ) sont des indications sur la température du récipient et/ou de son contenu devant être chauffé et sont en particulier fournies par deux capteurs, la valeur finale réglée (Tₖₑ) étant de préférence la température souhaitée pour le contenu.

13. Procédé suivant la revendication 12, **caractérisé en ce qu'**une température finale (Tₖₑ) prévue pour le contenu et/ou le récipient est prescrite par un utilisateur au moyen d'un organe de réglage et/ou d'une commande électronique, en particulier avec des commutateurs tactiles comme moyens d'entrée.
